# EUROPÄISCHE PATENTSCHRIFT

(11) **EP 2 819 817 B1**
(45) Veröffentlichungstag und Bekanntmachung des Hinweises auf die Patenterteilung: **01.04.2020**
(21) Anmeldenummer: 13700065.9
(22) Anmeldetag: 03.01.2013
(51) Int. Cl.: B27B 33/14

(54) **VERFAHREN ZUR HERSTELLUNG VON ZUMINDEST EINEM SCHNEIDSTRANGSEGMENT EINES SCHNEIDSTRANGS UND EINE WERKZEUGMASCHINENTRENNVORRICHTUNG**
METHOD FOR PRODUCING AT LEAST ONE CUTTING UNIT SEGMENT OF A CUTTING UNIT AND A MACHINE TOOL CUTTING DEVICE
PROCÉDÉ DE PRODUCTION D'AU MOINS UN SEGMENT D'UNE BANDE DE COUPE ET UNE MACHINE-OUTIL A DISPOSITIF DE COUPE

(30) Priorität: 02.03.2012 DE 102012004052; 30.10.2012 DE 102012219855
(43) Veröffentlichungstag der Anmeldung: 07.01.2015
(73) Patentinhaber: Robert Bosch GmbH, 70442 Stuttgart (DE)
(72) Erfinder: HUG, Arnold, 3900 Gamsen (CH); KARLEN, Urs, 3922 Stalden (CH); BOZIC, Milan, 4500 Solothurn (CH); LAUBER, Joe, 3920 Zermatt (CH); GRUBER, Ivo, 3924 St. Niklaus (CH)
(86) Internationale Anmeldenummer: PCT/EP2013/050044
(87) Internationale Veröffentlichungsnummer: WO 2013/127542

(56) Entgegenhaltungen:
- WO-A1-2012/143419
- DE-A1- 3 734 148
- DE-A1-102010 011 837
- US-A- 3 144 059
- US-A- 3 308 859
- US-A- 3 380 496
- US-A- 3 449 146
- US-A1- 2008 121 084

## Beschreibung

### Stand der Technik

Es sind bereits Verfahren zur Herstellung von einem Schneidstrangsegment eines Schneidstrangs bekannt. Das Schneidstrangsegment umfasst hierbei ein Schneidenträgerelement und ein Schneidelement, die nach einem Herstellungsverfahren miteinander verbunden werden. Ein Verfahren gemäß dem Oberbegriff des Anspruchs 1, und eine Werkzeugmaschinentrennvorrichtung gemäß dem Oberbegriff des Anspruchs 5, ist der DE102010011837 zu entnehmen.

### Offenbarung der Erfindung

Es wird ein Verfahren zur Herstellung von zumindest einem Schneidstrangsegment eines Schneidstrangs, das zumindest ein Schneidelement und zumindest ein Schneidenträgerelement, welches zumindest ein Verbindungselement aufweist, umfasst, wobei das Schneidstrangsegment in einem ersten Schritt aus einem Bandmaterial gestanzt wird. Somit wird das Schneidstrangsegment vorzugsweise in einem ersten Schritt zumindest einer Stanzvorrichtung zugeführt, mittels deren das Schneidstrangsegment aus dem Bandmaterial gestanzt wird. Hierbei weist die Stanzvorrichtung eine, einem Fachmann bereits bekannte Ausgestaltung auf. Unter einem "Schneidstrangsegment" soll hier insbesondere ein Segment eines Schneidstrangs verstanden werden, das dazu vorgesehen ist, zur Bildung des Schneidstrangs mit weiteren Segmenten des Schneidstrangs verbunden zu werden. Das Schneidstrangsegment weist insbesondere ein maximales Gewicht auf, das geringer ist als 1 g, bevorzugt geringer ist als 0,5 g und besonders bevorzugt geringer ist als 0,2 g. Insbesondere weist das Schneidstrangsegment ein maximales Volumen auf, das kleiner ist als 20 mm³. Vorzugsweise weist das Schneidstrangsegment ein maximales Volumen auf, das kleiner ist als 10 mm³ und besonders bevorzugt kleiner ist als 5 mm³. Bevorzugt ist das Schneidstrangsegment als Kettenglied ausgebildet, das zur Bildung des vorzugsweise als Schneidkette ausgebildeten Schneidstrangs mit weiteren als Kettenglieder ausgebildeten Schneidstrangsegmenten verbunden ist. Unter einem "Schneidstrang" soll hier insbesondere eine Einheit aus Schneidstrangsegmenten verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Der Schneidstrang ist besonders bevorzugt als Schneidkette ausgebildet. Hierbei können die Schneidstrangsegmente lösbar, wie beispielsweise mittels eines Kettenschlosses usw., und/oder unlösbar miteinander verbunden sein. Es ist jedoch auch denkbar, dass der Schneidstrang als Schneidband und/oder Schneidseil ausgebildet ist. Bei einer Ausbildung des Schneidstrangs als Schneidband und/oder als Schneidseil werden die Schneidstrangsegmente direkt an dem Schneidband und/oder an dem Schneidseil fixiert. Die Schneidstrangsegmente können hierbei beabstandet voneinander und/oder in direktem Kontakt miteinander an dem Schneidband und/oder an dem Schneidseil angeordnet sein.

Unter einem "Schneidenträgerelement" soll hier insbesondere ein Element verstanden werden, an dem zumindest ein Schneidelement zum Abtrennen und/oder zum Abtragen von Werkstoffteilchen eines zu bearbeitenden Werkstücks fixiert ist. Bevorzugt ist das Schneidenträgerelement stoffschlüssig mit dem Schneidelement verbunden. Das Schneidelement und/oder das Schneidenträgerelement weisen/weist insbesondere, entlang einer zumindest im Wesentlichen senkrecht zu einer Schneidebene des Schneidelements bzw. des Schneidstrangs verlaufenden Richtung betrachtet, eine maximale Abmessung auf, die kleiner ist als 4 mm. Bevorzugt weisen/weist das Schneidelement und/oder das Schneidenträgerelement bzw. das weitere Schneidenträgerelement, entlang der zumindest im Wesentlichen senkrecht zur Schneidebene des Schneidelements bzw. des Schneidstrangs verlaufenden Richtung betrachtet, eine maximale Abmessung auf, die kleiner ist als 3 mm und besonders bevorzugt kleiner ist als 2,5 mm. Besonders bevorzugt ist das Schneidelement einstückig mit dem Schneidenträgerelement ausgebildet. Unter "einstückig" soll insbesondere in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling, wie beispielsweise einem Stanzrohling. Hierbei kann das Schneidelement als Halbmeißelzahn, als Vollmeißelzahn, als "scratcher"-Zahn (Risserzahn) usw. ausgebildet sein. Es ist jedoch auch denkbar, dass das Schneidelement eine andere, einem Fachmann als sinnvoll erscheinende Zahnform aufweist. Der Begriff "Verbindungselement" soll hier insbesondere ein Element definieren, das dazu vorgesehen ist, zumindest zwei Bauteile formschlüssig und/oder kraftschlüssig miteinander zu verbinden, insbesondere beweglich miteinander zu verbinden, um eine Antriebskraft und/oder ein Antriebsmoment zu übertragen. In diesem Zusammenhang soll unter "vorgesehen" insbesondere speziell ausgelegt und/oder speziell ausgestattet verstanden werden. Mittels der erfindungsgemäßen Ausgestaltung des Verfahrens kann vorteilhaft kostengünstig ein Schneidstrangsegment hergestellt werden. Ferner kann mittels des Verfahrens eine hohe Vielfalt hinsichtlich der zu verarbeitenden Werkstoffe zur Herstellung des Schneidstrangsegments erreicht werden.

In einer bevorzugten Ausgestaltung des Verfahrens wird vorgeschlagen, dass als Bandmaterial Bimetall verwendet wird. Bevorzugt ist das Bimetall als eine flexible, hochfeste Bimetall-Verbindung aus zähem Kohlenstoffstahl (HCS) und Schnellarbeitsstahl (HSS) ausgebildet. Es ist jedoch auch denkbar, dass das Bandmaterial nur von einem der oben genannten Werkstoffe der Bimetall-Verbindung gebildet wird. Es kann vorteilhaft ein widerstandsfähiges Schneidstrangsegment erreicht werden, das zu einer Bearbeitung von harten Materialien geeignet ist.

In einer alternativen Ausgestaltung des Verfahrens wird vorgeschlagen, dass als Bandmaterial ein Hartmetall verwendet wird. Es ist jedoch auch denkbar, dass das Bandmaterial von einem anderen, einem Fachmann als sinnvoll erscheinenden Werkstoff gebildet wird. Es kann vorteilhaft ein Schneidstrangsegment hergestellt werden, das zu einer Bearbeitung von abrasiven Materialien, wie beispielsweise glasfaserverstärktem Kunststoff, Porenbeton usw., geeignet ist.

Vorteilhafterweise wird in einem weiteren Schritt das Schneidstrangsegment zumindest in einem Teilbereich des Schneidelements einem Prägevorgang unterzogen. Mittels des erfindungsgemäßen Prägevorgangs kann vorteilhaft eine Verschränkung des Schneidelements relativ zu einer Schneidebene des Schneidstrangs erreicht werden. Zudem ist es auch denkbar, dass alternativ oder zusätzlich zum Prägevorgang eine Hartmetallschneidkante auf das Schneidelement des Schneidstrangsegments aufgebracht wird oder ein Streifen aus hochverschleißfestem Werkstoff als Schneidkante aufgelötet wird, die mittels eines Schleifvorgangs geschärft wird. Besonders bevorzugt wird eine Hartmetallschneidkante in Form eines Streifens oder ein Streifen aus einem anderen, einem Fachmann als sinnvoll erscheinenden hochverschleißfesten Werkstoff als Schneidkantenverstärkungselement mittels eines Schweißverfahrens nach dem Stanzvorgang am Schneidelement angebracht. Hierbei ist jegliches, einem Fachmann als sinnvoll erscheinendes Schweißverfahren anwendbar, wie beispielsweise eine Anwendung eines Laserschweißverfahrens, eines Schutzgasschweißverfahrens, eines Feuerschweißverfahrens, eines Gasschmelzschweißverfahrens, eines Lichtbogenschweißverfahrens usw. Insbesondere weist eine Schweißnaht, über die das Schneidkantenverstärkungselement mit dem Schneidelement verbunden ist, einen maximalen Abstand relativ zu einer Schneidkante des Schneidelements bzw. relativ zu einer Zahnspitze des Schneidelements auf, der kleiner ist als 1 mm, bevorzgt kleiner ist als 0,7 mm und besonders bevorzugt kleiner ist als 0,4 mm. Hierbei wird der maximale Abstand vorzugsweise entlang einer zumindest im Wesentlichen senkrecht zu einer Schneidrichtung des Schneidelements bzw. des Schneidstrangs verlaufenden Richtung zwischen einer Mittelachse der Schweißnaht und der Schneidkante bzw. der Zahnspitze gemessen. Bevorzugt ist ein minimaler Abstand der Schweißnaht zur Schneidkante bzw. zur Zahnspitze hierbei nicht kleiner als 0,3 mm. Mittels des Abstands zwischen der Schweißnaht und der Schneidkante bzw. der Zahnspitze kann vorteilhaft sichergestellt werden, dass inbesondere bei kleinen Abmessungen des Schneidstrangsegments eine ausreichende Menge an Material der Hartmetallschneidkante oder des hochverschleißfesten Werkstoffs am Schneidelement angebracht werden kann, ohne nach wenigen Schneidvorgängen durch Abnutzung der Hartmetallschneidkante oder des hochverschleißfesten Werkstoffs in eine Diffusionszone der Schweißnaht zu gelangen.

Insbesondere weist die Schweißnaht, insbesondere betrachtet entlang einer ausgehend von der Schneidkante bzw. der Zahnspitze dem Schneidenträgerelement zugewandten Richtung, einen maximalen Abstand zu einer Prägekontur, insbesondere zu einer nächstliegenden Prägekontur, auf, der kleiner ist als 0,8 mm, bevorzugt kleiner ist als 0,4 mm und besonders bevorzugt kleiner ist als 0,3 mm. Hierbei wird der maximale Abstand zwischen Schweißnaht und Prägekontur insbesondere zwischen einer der Prägekontur am nächsten liegenden Seite der Schweißnaht und einer der Schweißnaht am nächsten liegenden Seite der Prägekontur gemessen. Bevorzugt ist ein minimaler Abstand der Schweißnaht zu einer Prägekontur, insbesondere zu einer nächstliegenden Prägekontur, hierbei nicht kleiner als 0,2 mm. Vorzugsweise ist die Prägekontur, betrachtet entlang der ausgehend von der Schneidkante bzw. der Zahnspitze dem Schneidenträgerelement zugewandten Richtung, nach der Schneidkante bzw. der Zahnspitze angeordnet. Bevorzugt verläuft die ausgehend von der Schneidkante bzw. der Zahnspitze dem Schneidenträgerelement zugewandte Richtung zumindest im Wesentlichen senkrecht zur Schneidrichtung des Schneidelements bzw. des Schneidstrangs. Durch die erfindungsgemäße Anordnung der Schweißnaht relativ zu einer nächstliegenden Prägekontur kann vorteilhaft eine Verformung der Schweißnaht und/oder eine Verformung eines harten Bereichs des Schneidelements um die Schweißnaht herum während eines Prägevorgangs vermieden werden bzw. gering gehalten werden. Ferner weist die Schweißnaht, betrachtet entlang einer zumindest im Wesentlichen parallel zu einer Schneidebene des Schneidelements bzw. des Schneidstrangs und zumindest im Wesentlichen senkrecht zur Schneidrichtung des Schneidelements bzw. des Schneidstrangs verlaufenden Richtung, eine maximale Erstreckung auf, die insbesondere kleiner ist als 800 µm, bevorzugt kleiner ist als 600 µm und besonders bevorzugt kleiner ist als 460 µm. Hierdurch kann vorteilhaft bei einer geringen Abmessung der Schweißnaht eine hohe Verbindungssteifigkeit der Schweißnaht bei auftretenden Schnittkräften erreicht werden.

Des Weiteren wird gemäß der Erfindung in einem weiteren Schritt das Schneidstrangsegment einer Veredelungsvorrichtung zugeführt. Unter einer "Veredelungsvorrichtung" soll hier insbesondere eine Vorrichtung verstanden werden, die dazu vorgesehen ist, zumindest eine Eigenschaft eines Elements oder eines Teilbereichs des Elements zu verändern, insbesondere mittels eines Beschichtens, mittels eines Härtens usw. Bevorzugt umfasst die Veredelungsvorrichtung eine Tauchbadeinheit oder eine Auftragungseinheit. Es ist jedoch auch denkbar, dass die Veredelungsvorrichtung alternativ oder zusätzlich eine Härteeinheit umfasst. Hierbei kann die Härteeinheit als Alterungseinheit ausgebildet sein oder als Härteofen usw. Es kann mittels der Veredelungsvorrichtung vorzugsweise eine Veredelung mittels eines Tauchbads oder mittels eines Auftragens erreicht werden. Somit kann vorteilhaft eine hohe Standzeit des Schneidstrangsegments erreicht werden.

Gemäß der Erfindung wird in einem weiteren Schritt in der Veredelungsvorrichtung zumindest in einem Teilbereich des Schneidstrangsegments eine Beschichtung auf das Schneidstrangsegment aufgebracht. Die Beschichtung wird bevorzugt von einem Lot gebildet. Vorzugsweise wird das Lot von einem Kupfer- oder von einem Nickellot gebildet. Es ist jedoch auch denkbar, dass das Lot von einem anderen, einem Fachmann als sinnvoll erscheinenden Werkstoff gebildet wird. Hierbei wird die Beschichtung insbesondere mittels eines Tauchbads oder mittels eines Auftragens auf das Schneidstrangsegment aufgebracht. Der Teilbereich des Schneidstrangsegments wird bevorzugt von dem Schneidelement des Schneidstrangsegments gebildet. Es kann vorteilhaft eine Eigenschaft des Teilbereichs des Schneidstrangsegments an verschiedene Einsatzerfordernisse angepasst werden.

Zudem erfolgt gemäß der Erfindung in einem weiteren Schritt in der Veredelungsvorrichtung eine Bestückung des mit Beschichtung versehenen Teilbereichs des Schneidstrangsegments mit Partikeln. Bevorzugt sind die Partikel als hartmetallischer, als diamantener und/oder als keramischer Werkstoff ausgebildet. Es ist jedoch auch denkbar, dass die Partikel aus einem anderen, einem Fachmann als sinnvoll erscheinenden Werkstoff gebildet werden. Es kann vorteilhaft ein harter und widerstandsfähiger Teilbereich des Schneidstrangsegments erreicht werden. Insbesondere bei einer Ausgestaltung des Teilbereichs als Schneidelement kann vorteilhaft mittels einer Partikelbestückung eine harte, nicht definierte Schneidkante des Schneidelements realisiert werden.

Des Weiteren geht die Erfindung aus von einer Werkzeugmaschinentrennvorrichtung mit zumindest einer Führungseinheit und mit zumindest einem Schneidstrang, der wenigstens ein mittels des erfindungsgemäßen Verfahrens hergestelltes Schneidstrangsegment aufweist. Die Führungseinheit ist bevorzugt zur Führung des Schneidstrangs vorgesehen. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang deren der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt.

Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind. Mittels der erfindungsgemäßen Ausgestaltung der Werkzeugmaschinentrennvorrichtung kann vorteilhaft ein vielseitig einsetzbares Werkzeug zur Bearbeitung von Werkstücken erreicht werden.

Vorteilhafterweise umfasst die Werkzeugmaschinentrennvorrichtung zumindest ein Drehmomentübertragungselement, das zumindest teilweise in der Führungseinheit gelagert ist. Bevorzugt weist das Drehmomentübertragungselement eine konzentrische Ausnehmung auf, in die ein Ritzel einer Antriebseinheit einer tragbaren Werkzeugmaschine und/oder ein Zahnrad und/oder eine verzahnte Welle einer Getriebeeinheit der tragbaren Werkzeugmaschine in einem montierten Zustand eingreifen kann. Die Ausnehmung wird hierbei bevorzugt von einem Innensechskant gebildet. Es ist jedoch auch denkbar, dass die Ausnehmung eine andere, einem Fachmann als sinnvoll erscheinende Ausgestaltung aufweist. Mittels der erfindungsgemäßen Ausgestaltung der Werkezugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der erfindungsgemäßen Werkzeugmaschinentrennvorrichtung vermieden werden.

Des Weiteren wird vorgeschlagen, dass das Schneidstrangsegment zumindest in einem Bereich eines Schneidelements des Schneidstrangsegments partikelbestückt ausgebildet ist. Hierbei ist bevorzugt eine Schneidspitze des Schneidelements partikelbestückt. Es ist jedoch auch denkbar, dass das gesamte Schneidelement partikelbestückt ist. Es kann vorteilhaft eine Eigenschaft des Schneidelements des Schneidstrangsegments an verschiedene Einsatzerfordernisse angepasst werden.

Vorteilhafterweise ist das Schneidelement mit Diamanten und/oder mit einem keramischen Werkstoff partikelbestückt ausgebildet. Es ist jedoch auch denkbar, dass das Schneidelement alternativ oder zusätzlich mit einem metallischen, insbesondere hartmetallischen, Werkstoff partikelbestückt ist oder mit einem anderen, einem Fachmann als sinnvoll erscheinenden Werkstoff. Somit kann vorteilhaft mittels einer Partikelbestückung eine harte, nicht definierte Schneidkante des Schneidelements realisiert werden.

Zudem geht die Erfindung aus von einer tragbaren Werkzeugmaschine mit zumindest einer Kopplungsvorrichtung, die formschlüssig und/oder kraftschlüssig mit einer erfindungsgemäßen Werkzeugmaschinentrennvorrichtung gekoppelt ist. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Es kann vorteilhaft eine tragbare Werkzeugmaschine erreicht werden, die besonders vorteilhaft für ein breites Einsatzspektrum geeignet ist.

Die erfindungsgemäße Werkzeugmaschinentrennvorrichtung und/oder die erfindungsgemäße tragbare Werkzeugmaschine soll hierbei nicht auf die oben beschriebene Anwendung und Ausführungsform beschränkt sein. Insbesondere kann die erfindungsgemäße Werkzeugmaschinentrennvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl im Schutzumfang. aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen im Schutzumfang zusammenfassen.

Die Ausführungsbeispiele gemäß der Abbildungen 1, 2, 3, 4, 6 und 8 sind nicht erfindungsgemäß. Es zeigen:
- Fig. 1: ein Diagramm eines Ablaufs eines Verfahrens zur Herstellung von zumindest einem Schneidstrangsegment eines Schneidstrangs in einer schematischen Darstellung,
- Fig. 2: eine tragbare Werkzeugmaschine mit einer erfindungsgemäßen Werkzeugmaschinentrennvorrichtung in einer schematischen Darstellung,
- Fig. 3: eine Detailansicht der Werkzeugmaschinentrennvorrichtung in einer schematischen Darstellung,
- Fig. 4a: eine Detailansicht eines Schneidstrangsegments eines Schneidstrangs der Werkzeugmaschinentrennvorrichtung in einer schematischen Darstellung,
- Fig. 4b: eine Detailansicht einer Anordnung einer Schweißnaht am Schneidstrangsegment zu einer Anbringung einer widerstandsfähigen Schneidkante an einem Schneidelement des Schneidstrangsegments in einer schematischen Darstellung,
- Fig. 4c: eine weitere Detailansicht der Anordnung der Schweißnaht am Schneidstrangsegment in einer schematischen Darstellung,
- Fig. 5: eine Detailansicht eines Schneidstrangsegments des Schneidstrangs einer erfindungsgemäßen Werkzeugmaschinentrennvorrichtung in einer schematischen Darstellung,
- Fig. 6: eine Detailansicht eines Schneidstrangsegments eines Schneidstrangs einer alternativen Werkzeugmaschinentrennvorrichtung in einer schematischen Darstellung,
- Fig. 7: eine Detailansicht eines Schneidstrangsegments des Schneidstrangs einer erfindungsgemäßen Werkzeugmaschinentrennvorrichtung in einer schematischen Darstellung,
- Fig. 8: eine Detailansicht eines Schneidstrangsegments eines Schneidstrangs einer weiteren, alternativen Werkzeugmaschinentrennvorrichtung in einer schematischen Darstellung und
- Fig. 9: eine Detailansicht eines Schneidstrangsegments des Schneidstrangs einer erfindungsgemäßen Werkzeugmaschinentrennvorrichtung in einer schematischen Darstellung.

### Beschreibung der Ausführungsbeispiele

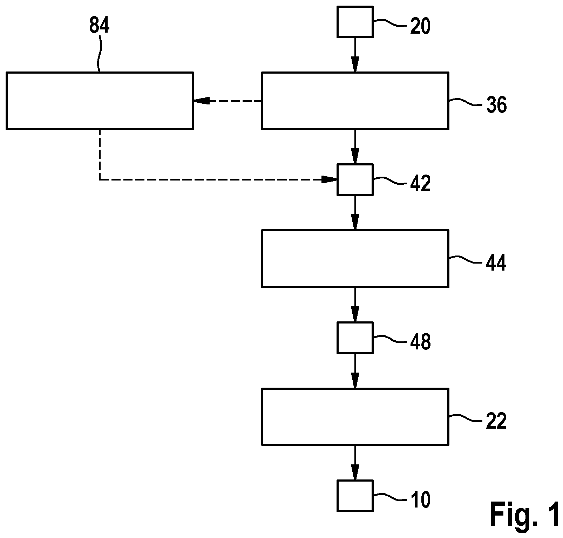

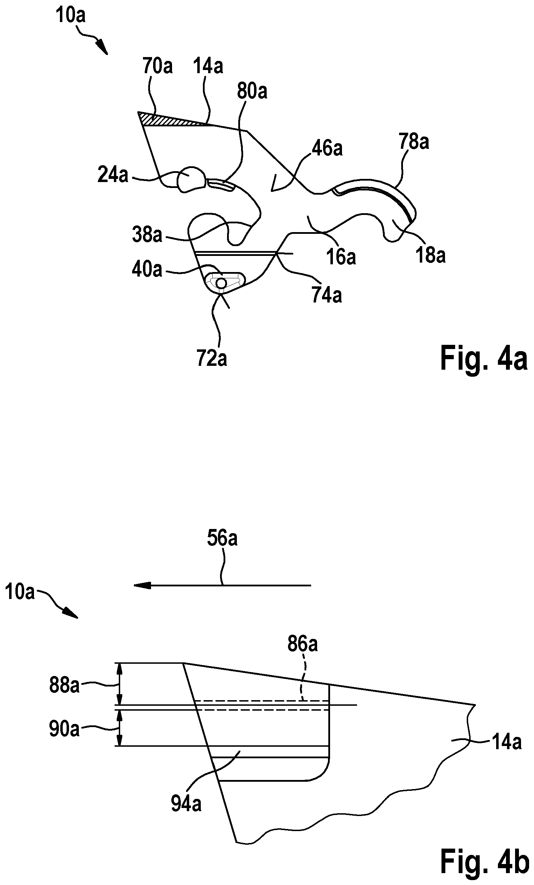

Figur 1 zeigt einen schematischen Ablauf eines nicht erfindungsgemäßen Verfahrens zur Herstellung von zumindest einem Schneidstrangsegment 10 eines Schneidstrangs 12 (Bezugszeichen in Figuren 4a bis 9 mit Buchstaben a bis c versehen), das zumindest ein Schneidelement 14 (Bezugszeichen in Figuren 4a bis 9 mit Buchstaben a bis c versehen) und ein Schneidenträgerelement 16 (Bezugszeichen in Figuren 4a bis 9 mit Buchstaben a bis c versehen), welches zumindest ein Verbindungselement 18 (Bezugszeichen in Figuren 4a bis 9 mit Buchstaben a bis c versehen) aufweist, umfasst. Das Schneidstrangsegment 10 wird in einem ersten Schritt aus einem Bandmaterial 20 gestanzt. Hierbei wird als Bandmaterial 20 ein Bimetall verwendet. In einer alternativen Ausführung des Verfahrens wird als Bandmaterial 20 ein Hartmetall verwendet. Es ist jedoch auch denkbar, dass als Bandmaterial 20 ein anderer, einem Fachmann als sinnvoll erscheinender Werkstoff verwendet wird, der sich zu einem Stanzvorgang eignet. Das Bandmaterial 20 wird mittels einer Abrollvorrichtung (hier nicht näher dargestellt) auf eine, einem Fachmann bereits bekannte Art und Weise einer Stanzvorrichtung 36 zugeführt.

Mittels der Stanzvorrichtung 36 wird das Schneidstrangsegment 10 aus dem Bandmaterial 20 herausgestanzt. Somit wird das Schneidelement 14 und das Schneidenträgerelement 16 während eines Verfahrensschritts aus dem Bandmaterial 20 heraus gestanzt. Hierbei wird das Verbindungselement 18 mittels eines Umformens durch ein Zusammenwirken einer Matrize und eines Stempels der Stanzvorrichtung 36 ebenfalls bereits während des Stanzens an das Schneidenträgerelement 16 angeformt. Zudem wird mittels des Zusammenwirkens der Matrize und des Stempels eine Verbindungsausnehmung 38 (Bezugszeichen in Figuren 4a bis 9 mit Buchstaben a bis c versehen) des Schneidstrangsegments 10 an das Schneidenträgerelement 16 angeformt bzw. in das Schneidenträgerelement 16 eingeprägt. Ferner wird mittels des Zusammenwirkens der Matrize und des Stempels ein Segmentführungselement 40 (Bezugszeichen in Figuren 4a bis 9 mit Buchstaben a bis c versehen) des Schneidstrangsegments 10 an das Schneidenträgerelement 16 angeformt. Es ist jedoch auch denkbar, dass zusätzlich mittels des Zusammenwirkens der Matrize und des Stempels weitere Funktionselemente an das Schneidstrangsegment 10 angeformt werden, wie beispielsweise ein Quersicherungsbereich, ein Quersicherungselement usw. Somit wird, gemäß der Erfindung, zumindest in einem weiteren Schritt zumindest an das Schneidenträgerelement 16 ein Quersicherungselement 24 angeprägt. Dieser Schritt kann bereits in diesem Stadium des Verfahrens erfolgen. Es ist jedoch auch denkbar, dass das Quersicherungselement 24 erst nach einer Montage des Schneidstrangsegments 10 zur Bildung des Schneidstrangs 12 mittels einer weiteren Prägevorrichtung (hier nicht näher dargestellt) erfolgt.

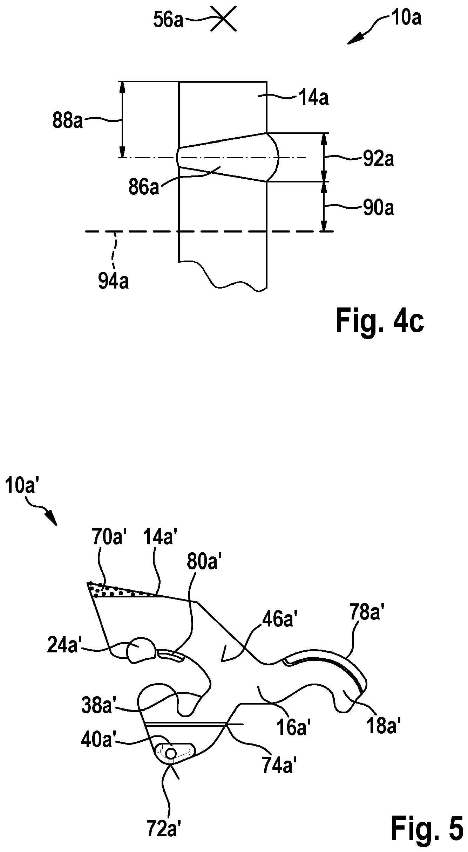

Zudem wird in einem weiteren, zusätzlichen oder alternativen Schritt des Verfahrens ein als Hartmetallschneidkante in Form eines Streifens ausgebildetes Schneidkantenverstärkungselement oder ein als Streifen aus einem anderen, einem Fachmann als sinnvoll erscheinenden hochverschleißfestem Werkstoff ausgebildetes Schneidkantenverstärkungselement durch eine Schweißvorrichtung 84 mittels eines Schweißverfahrens an dem Schneidelement 14 des Schneidstrangsegments 10 angebracht. Hierbei weist eine Schweißnaht 86 (Bezugszeichen in Figur 4b und 4c mit dem Buchstaben a versehen), die zu einer Anbringung des Schneidkantenverstärkungselements am Schneidelement 14 vorgesehen ist, einen maximalen Abstand 88 (Bezugszeichen in Figur 4b und 4c mit dem Buchstaben a versehen) relativ zu einer Schneidkante des Schneidelements 14 bzw. relativ zu einer Zahnspitze des Schneidelements 14 auf, der kleiner ist als 0,4 mm (Figur 4b). Somit weist das Schneidkantenverstärkungselement, betrachtet entlang einer zumindest im Wesentlichen parallel zu einer Schneidebene des Schneidelements 14 bzw. des Schneidstrangs 12 und zumindest im Wesentlichen senkrecht zu einer Schneidrichtung 56 (Bezugszeichen in Figur 4b und 4c mit dem Buchstaben a versehen) des Schneidelements 14 bzw. des Schneidstrangs 12 verlaufenden Richtung, eine maximale Erstreckung auf, die in einem am Schneidelement 14 angeschweißten Zustand maximal dem maximalen Abstand 88 der Schweißnaht 86 relativ zur Schneidkante des Schneidelements 14 bzw. relativ zur Zahnspitze des Schneidelements 14 entspricht. Ferner weist die Schweißnaht 86, betrachtet entlang einer ausgehend von der Schneidkante bzw. der Zahnspitze dem Schneidenträgerelement 16 zugewandten Richtung, einen maximalen Abstand 90 (Bezugszeichen in Figur 4b und 4c mit dem Buchstaben a versehen) zu einer nächstliegenden Prägekontur 94 (Bezugszeichen in Figur 4b und 4c mit dem Buchstaben a versehen) des Schneidstrangsegments 10 auf, der kleiner ist als 0,3 mm. Zudem weist die Schweißnaht 86, betrachtet entlang einer zumindest im Wesentlichen parallel zur Schneidebene des Schneidelements 14 bzw. des Schneidstrangs 12 und zumindest im Wesentlichen senkrecht zur Schneidrichtung 56 des Schneidelements 14 bzw. des Schneidstrangs 12 verlaufenden Richtung, eine maximale Erstreckung 92 (Bezugszeichen in Figur 4c mit dem Buchstaben a versehen) auf, die kleiner ist als 460 µm (Figur 4c).

In einem weiteren Schritt wird das Schneidstrangsegment 10 einem Prägevorgang unterzogen. Hierbei wird das Schneidstrangsegment 10 in Form eines gestanzten Rohlings 42 einer Prägevorrichtung 44 zugeführt. Mittels der Prägevorrichtung 44 wird eine Verschränkung des Schneidelements 14 relativ zu einer Außenfläche 46 (Bezugszeichen in Figuren 4a bis 9 mit Buchstaben a bis c versehen) des Schneidenträgerelements 16 erreicht. Hierbei wird Material im Bereich des Schneidelements 14 durch die Prägevorrichtung 44 relativ zur Außenfläche 46 versetzt. Es ist jedoch auch denkbar, dass das Schneidstrangsegment 10 erst zu einem späteren Zeitpunkt im Verfahren der Prägevorrichtung 44 zugeführt wird, um das Schneidelement 14 relativ zur Außenfläche 46 zu verschränken.

Das Schneidstrangsegment 10 wird ferner in einem weiteren Schritt einer Veredelungsvorrichtung 22 zugeführt, um das Schneidstrangsegment 10 einem Veredelungsprozess zuzuführen. Hierbei wird das Schneidstrangsegment 10 als geprägter Rohling 48 der Veredelungsvorrichtung 22 zugeführt. In der Veredelungsvorrichtung 22 wird zumindest in einem Teilbereich des Schneidstrangsegments 10 eine Beschichtung auf das Schneidstrangsegment 10 aufgebracht. Der Teilbereich des Schneidstrangsegments 10 wird von dem Schneidelement 14 gebildet. Hierbei wird das Schneidstrangsegment 10 mit dem Schneidelement 14 durch eine Tauchbadeinheit (hier nicht näher dargestellt) der Veredelungsvorrichtung 22 geführt. In der Tauchbadeinheit wird das Schneidelement 14 zumindest teilweise mit einem Lot beschichtet. Es ist jedoch auch denkbar, dass das Schneidelement 14 mittels einer Auftrageeinheit der Veredelungsvorrichtung 22 mit einem Lot beschichtet wird. In einem weiteren Schritt erfolgt in der Veredelungsvorrichtung 22 eine Bestückung des mit Beschichtung versehenen Teilbereichs des Schneidstrangsegments 10 mit Partikeln. Hierbei werden die Partikel entweder mittels eines Durchfahrens eines weiteren Tauchbads oder mittels eines Aufdrückens auf den mit Beschichtung versehenen Teilbereich des Schneidstrangsegments 10 mit Partikeln bestückt. Die Partikel sind als Diamant-, als Hartmetall- oder als Keramikpartikel ausgebildet. Es ist jedoch auch denkbar, dass das Schneidstrangsegment 10 zumindest in einem Teilbereich alternativ zum Tauchbad mittels einer chemischen Gasphasenabscheidungseinheit (hier nicht näher dargestellt) der Veredelungsvorrichtung 22 beschichtet wird. Andere, einem Fachmann als sinnvoll erscheinende Verfahren zu einer Beschichtung des Schneidelements 14 des Schneidstrangsegments 10 mittels der Veredelungsvorrichtung 22 sind ebenfalls denkbar, wie beispielsweise mittels eines physikalischen Gasphasenabscheidungsverfahrens (PVD-Verfahren) oder mittels eines plasmaunterstützten chemischen Gasphasenabscheidungsvefahrens (PACVD-Verfahren) usw. Nach einem Veredelungsvorgang mittels der Veredelungsvorrichtung 22 ist das Schneidstrangsegment 10 als Fertigteil ausgebildet, das in einem weiteren Arbeitsprozess zur Bildung des Schneidstrangs 12 mit weiteren, hier nicht näher dargestellten Schneidstrangsegmenten verbunden wird. Hierbei werden die einzelnen Schneidstrangsegmente einer Montagevorrichtung zugeführt, in der die einzelnen Schneidstrangsegmente miteinander verbunden wird. Es ist denkbar, dass an die Schneidstrangsegmente mittels der weiteren Prägevorrichtung (hier nicht näher dargestellt) nach einer Montage Quersicherungselemente angeformt werden, die dazu vorgesehen sind, eine Querbewegung der einzelnen Schneidstrangsegmente entlang einer zumindest im Wesentlichen senkrecht zu einer Schneidebene des Schneidstrangs 12 verlaufenden Richtung weitestgehend zu verhindern.

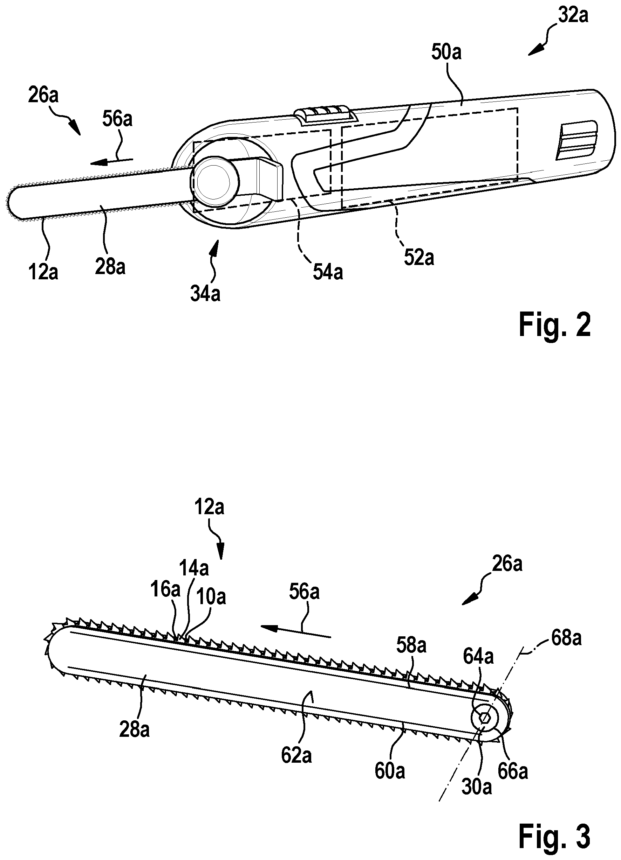

In Figuren 2 bis 9 sind verschiedene Ausführungsbeispiele von Schneidstrangsegmenten dargestellt, die mittels des oben beschriebenen Verfahrens hergestellt werden. Hierbei sind den Ausführungsbeispielen zur Unterscheidung den Bezugszeichen der Ausführungsbeispiele die Buchstaben a bis c hinzugefügt. Die nachfolgende Beschreibung der Ausführungsbeispiele beschränkt sich im Wesentlichen auf die Unterschiede in der geometrischen Ausgestaltung der mittels des Verfahrens hergestellten Schneidstrangsegmente der Ausführungsbeispiele.

Figur 2 zeigt eine tragbare Werkzeugmaschine 32a mit einer nicht erfindungsgemäßen Werkzeugmaschinentrennvorrichtung 26a, die zusammen ein Werkzeugmaschinensystem bilden. Die Werkzeugmaschinentrennvorrichtung 26a umfasst einen Schneidstrang 12a, der wenigstens ein mittels des oben beschriebenen Verfahrens hergestelltes Schneidstrangsegment 10a (Figur 3) aufweist, und eine Führungseinheit 28a zur Führung des Schneidstrangs 12a. Die tragbare Werkzeugmaschine 32a weist eine Kopplungsvorrichtung 34a zur formschlüssigen und/oder kraftschlüssigen Kopplung mit der Werkzeugmaschinentrennvorrichtung 26a auf. Die Kopplungsvorrichtung 34a kann hierbei als Bajonettverschluss und/oder als eine andere, einem Fachmann als sinnvoll erscheinende Kopplungsvorrichtung ausgebildet sein. Ferner weist die tragbare Werkzeugmaschine 32a ein Werkzeugmaschinengehäuse 50a auf, das eine Antriebseinheit 52a und eine Getriebeeinheit 54a der tragbaren Werkzeugmaschine 32a umschließt. Die Antriebseinheit 52a und die Getriebeeinheit 54a sind zur Erzeugung eines auf die Werkzeugmaschinentrennvorrichtung 26a übertragbaren Antriebsmoments auf eine, einem Fachmann bereits bekannte Art und Weise wirkungsmäßig miteinander verbunden. Die Getriebeeinheit 54a ist als Winkelgetriebe ausgebildet. Die Antriebseinheit 52a ist als Elektromotoreinheit ausgebildet. Es ist jedoch auch denkbar, dass die Antriebseinheit 52a und/oder die Getriebeeinheit 54a eine andere, einem Fachmann als sinnvoll erscheinende Ausgestaltung aufweisen. Die Antriebseinheit 52a ist dazu vorgesehen, den Schneidstrang 12a der Werkzeugmaschinentrennvorrichtung 26a in zumindest einem Betriebszustand mit einer Schnittgeschwindigkeit kleiner als 6 m/s anzutreiben. Hierbei weist die tragbare Werkzeugmaschine 32a zumindest einen Betriebsmodus auf, in dem ein Antrieb des Schneidstrangs 12a in der Führungseinheit 28a der Werkzeugmaschinentrennvorrichtung 26a entlang einer Schneidrichtung 56a des Schneidstrangs 12a mit einer Schnittgeschwindigkeit kleiner als 6 m/s ermöglicht wird.

Figur 3 zeigt die nicht erfindungsgemäße Werkzeugmaschinentrennvorrichtung 26a in einem von der Kopplungsvorrichtung 34a der tragbaren Werkzeugmaschine 32a entkoppelten Zustand. Die Werkzeugmaschinentrennvorrichtung 26a weist den Schneidstrang 12a und die Führungseinheit 28a auf, die zusammen ein geschlossenes System bilden. Die Führungseinheit 28a ist als Schwert ausgebildet. Der Schneidstrang 12a wird mittels der Führungseinheit 28a geführt. Hierzu weist die Führungseinheit 28a zumindest ein als Führungsnut ausgebildetes Führungselement (hier nicht näher dargestellt) auf, mittels dessen der Schneidstrang 12a geführt wird. Hierbei wird der Schneidstrang 12a mittels die Führungsnut begrenzende Randbereiche der Führungseinheit 28a geführt. Es ist jedoch auch denkbar, dass das Führungselement in einer anderen, einem Fachmann als sinnvoll erscheinenden Art und Weise, wie beispielsweise als rippenartige Anformung an der Führungseinheit 28a, die in eine Ausnehmung an dem Schneidstrang 12a eingreift, ausgebildet ist. Der Schneidstrang 12a wird während eines Betriebs umlaufend entlang des Umfangs in der Führungsnut relativ zur Führungseinheit 28a bewegt. Der Schneidstrang 12a umfasst insgesamt eine Vielzahl von miteinander verbundenen Schneidstrangsegmenten 10a.

Des Weiteren weist die Führungseinheit 28a zumindest zwei Segmentgegenführungselemente 58a, 60a zur Führung des Schneidstrangs 12a auf. Die Segmentgegenführungselemente 58a, 60a sind dazu vorgesehen, eine Bewegung des Schneidstrangs 12a, in einer von der Führungseinheit 28a abgewandten Richtung betrachtet, entlang jeweils einer zumindest im Wesentlichen parallel zur Schneidebene des Schneidstrangs 12a verlaufenden Richtung zu begrenzen. Die Segmentgegenführungselemente 58a, 60a sind hierbei als Ausstanzungen ausgebildet, die sich ausgehend von einer Außenfläche 62a der Führungseinheit 28a in Richtung einer Innenfläche (hier nicht näher dargestellt) der Führungseinheit 28a erstrecken. Hierbei wirken die Segmentgegenführungselemente 58a, 60a in einem in der Führungseinheit 28a angeordneten Zustand mit einem Segmentführungselement 40a (Figur 4a) des Schneidstrangsegments 10a zusammen.

Zum Antrieb des Schneidstrangs 12a weist die Werkzeugmaschinentrennvorrichtung 26a ein Drehmomentübertragungselement 30a auf, das zur Übertragung von Kräften und/oder von Drehmomenten auf den Schneidstrang 12a mit der Antriebseinheit 52a und/oder der Getriebeeinheit 54a verbindbar ist. Hierzu weist das Drehmomentübertragungselement 30a eine Kopplungsausnehmung 64a auf, in die ein Ritzel (hier nicht näher dargestellt) der Antriebseinheit 52a und/oder ein Zahnrad (hier nicht näher dargestellt) und/oder eine verzahnte Welle (hier nicht näher dargestellt) der Getriebeeinheit 54a in einem montierten Zustand eingreift. Die Kopplungsausnehmung 64a ist konzentrisch im Drehmomentübertragungselement 30a angeordnet. Ferner ist das Drehmomentübertragungselement 30a als Zahnrad ausgebildet. Das Drehmomentübertragungselement 30a ist zumindest teilweise in der Führungseinheit 28a gelagert. Hierbei ist das Drehmomentübertragungselement 30a, entlang einer Richtung senkrecht zur Schneidebene betrachtet, zumindest teilweise zwischen Außenflächen 62a der Führungseinheit 28a in einer Ausnehmung 66a der Führungseinheit 28a angeordnet. Ferner ist das Drehmomentübertragungselement 30a drehbar um eine Rotationsachse 68a in der Führungseinheit 28a gelagert.

Figur 4a zeigt eine Detailansicht des Schneidstrangsegments 10a des Schneidstrangs 12a der nicht erfindungsgemäßen Werkzeugmaschinentrennvorrichtung 26a. Das Schneidstrangsegment 10a umfasst zumindest das Schneidenträgerelement 16a und zumindest das Schneidelement 14a. Das Schneidenträgerelement 16a und das Schneidelement 14a sind einstückig ausgebildet. Das Schneidelement 14a weist hierbei eine zumindest Titancarbid aufweisende Schneidschicht 70a auf. Die Schneidschicht 70a wird mittels eines CVD-Verfahrens auf das Schneidelement 14a aufgebracht. Es ist jedoch auch denkbar, dass die Schneidschicht 70a alternativ oder zusätzlich einen anderen Werkstoff umfasst, wie beispielsweise Titannitrid, Titancarbonitrid, Aluminiumoxid, Titanaluminiumnitrid, Chromnitrid oder Zirkoncarbonitrid. Zudem ist es auch denkbar, dass die Schneidschicht 70a mittels eines anderen, einem Fachmann als sinnvoll erscheinenden Verfahrens aufgebracht wird, wie beispielsweise mittels eines PVD- oder PACVD-Verfahrens.

Das Schneidenträgerelement 16a weist zumindest ein Segmentführungselement 40a auf, das dazu vorgesehen ist, eine Bewegung des Schneidenträgerelements 16a, in einem in der Führungseinheit 28a angeordneten Zustand in einer von der Führungseinheit 28a abgewandten Richtung betrachtet, zumindest entlang der zumindest im Wesentlichen parallel zur Schneidebene des Schneidstrangs 12a verlaufenden Richtung zu begrenzen. Das Segmentführungselement 40a wird von einem Querfortsatz gebildet, der sich zumindest im Wesentlichen senkrecht zur Schneidebene des Schneidstrangs 12a erstreckt. Hierbei begrenzt das Segmentführungselement 40a eine Längsnut. Das Segmentführungselement 40a ist dazu vorgesehen, zu einer Bewegungsbegrenzung mit den an der dem Schneidenträgerelement 16a zugewandten Innenwand der Führungseinheit 28a angeordneten und als Rippe oder Ausstanzung ausgebildeten Segmentgegenführungselementen 58a, 60a zusammenzuwirken. Die Segmentgegenführungselemente 58a, 60a sind korrespondierend mit dem Segmentführungselement 40a ausgebildet.

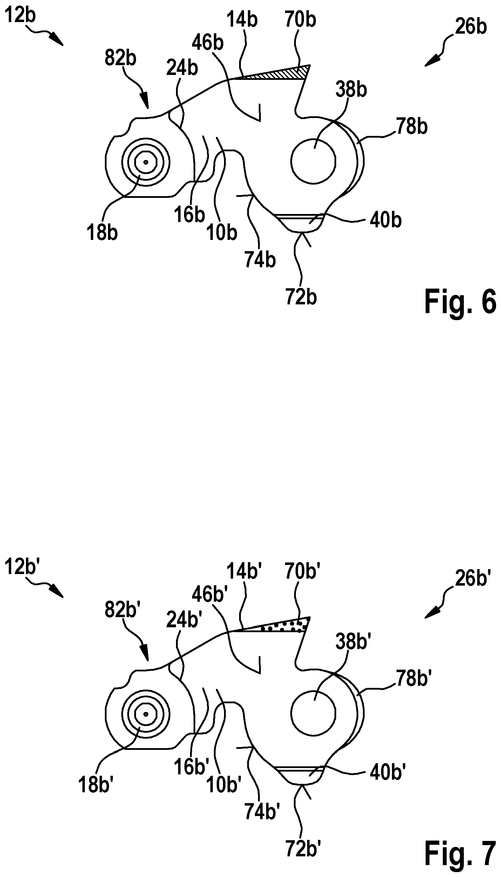

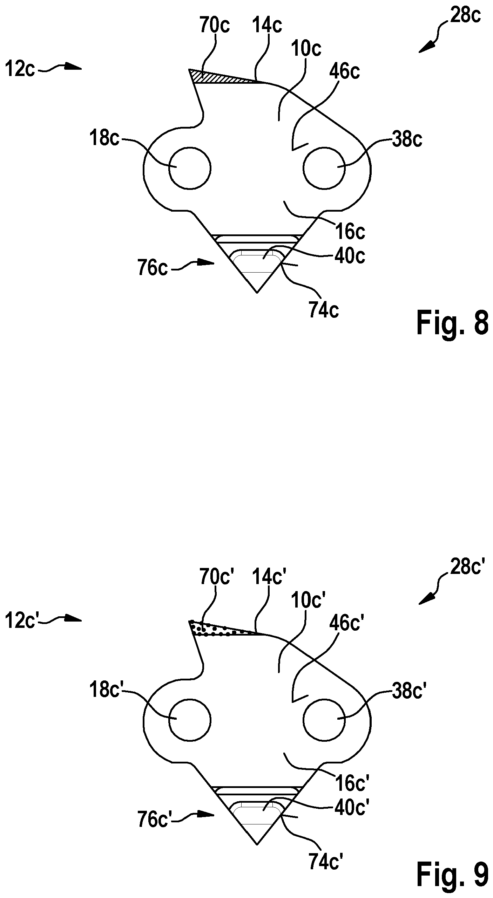

Zudem weist das Schneidenträgerelement 16a eine Druckkraftübertragungsfläche 72a auf (Figuren 7 und 8). Die Druckkraftübertragungsfläche 72a ist dazu vorgesehen, Druckkräfte, die bei einer Bearbeitung eines Werkstücks (hier nicht näher dargestellt) auf den Schneidstrang 12a einwirken, mittels eines Zusammenwirkens mit einem Druckkraftaufnahmebereich (hier nicht näher dargestellt) der Führungseinheit 28a abzustützen. Der Druckkraftaufnahmebereich der Führungseinheit 28a ist hierbei, betrachtet entlang einer zumindest im Wesentlichen senkrecht zur Schneidebene des Schneidstrangs 12a verlaufenden Richtung, zwischen den zumindest im Wesentlichen parallel zueinander verlaufenden Außenflächen 62a der Führungseinheit 28a angeordnet.

Das Schneidenträgerelement 16a weist ferner eine Antriebsfläche 74a auf, die dazu vorgesehen ist, zu einem Antrieb des Schneidstrangs 12a mit Antriebsflächen des Drehmomentübertragungselements 30a zusammenzuwirken. Die Antriebsflächen des Drehmomentübertragungselements 30a sind hierbei als Zahnflanken ausgebildet. Die Antriebsfläche 74a des Schneidenträgerelements 16a ist hierbei korrespondierend mit den Antriebsflächen des Drehmomentübertragungselements 30a ausgebildet. Bei einem Antrieb des Schneidstrangs 12a liegen die Zahnflanken des Drehmomentübertragungselements 30a temporär an der Antriebsfläche 74a zu einer Übertragung von Antriebskräften an.

Das Schneidenträgerelement 16a umfasst zur Bildung des Schneidstrangs 12a zumindest das Verbindungselement 18a, das zumindest im Wesentlichen bündig mit zumindest einer Außenfläche 46a des Schneidenträgerelements 16a abschließt. Hierbei schließt das Verbindungselement 18a, betrachtet entlang einer Querachse des Verbindungselements 18a, bündig mit beiden Außenflächen 46a des Schneidenträgerelements 16a ab (in Figur 4a lediglich eine Außenfläche dargestellt). Die Querachse des Verbindungselements 18a verläuft zumindest im Wesentlichen senkrecht zur Schneidebene des Schneidstrangs 12a. Das Verbindungselement 18a ist einstückig mit dem Schneidenträgerelement 16a ausgebildet. Hierbei ist das Verbindungselement 18a als Längsfortsatz des Schneidenträgerelements 16a ausgebildet. Das als Längsfortsatz ausgebildete Verbindungselement 18a erstreckt sich zumindest im Wesentlichen entlang einer Längserstreckung des Schneidenträgerelements 16a. Somit erstreckt sich das als Längsfortsatz ausgebildete Verbindungselement 18a zumindest im Wesentlichen parallel zur Schneidebene des Schneidstrangs 12a. Hierbei ist der Längsfortsatz hakenförmig ausgebildet. Hierbei ist der Längsfortsatz abweichend von einem stabförmigen Fortsatz ausgebildet, an den ein kreisförmiges Formschlusselement angeformt ist und/oder abweichend von einem halbkreisförmigen Fortsatz. Jedes Schneidenträgerelement 16a der Schneidstrangsegmente 10a des Schneidstrangs 12a weist jeweils ein als Längsfortsatz ausgebildetes Verbindungselement 18a und jeweils eine korrespondierend mit dem Verbindungselement 18a ausgebildete Verbindungsausnehmung 38a auf. Die einzelnen Verbindungselemente 18a der Schneidenträgerelemente 16a sind zur Bildung des als Schneidkette ausgebildeten Schneidstrangs 12a jeweils dazu vorgesehen, mittels eines Zusammenwirkens mit einer Verbindungsausnehmung 38a eine formschlüssige Verbindung zwischen den Schneidenträgerelementen 16a zu realisieren, mittels derer die Schneidenträgerelemente 16a schwenkbar miteinander verbunden sind.

Des Weiteren weist das als Längsfortsatz ausgebildete Verbindungselement 18a auf einer Seite einen Quersicherungsbereich 78a auf. Der Quersicherungsbereich 78a ist dazu vorgesehen, mittels eines Zusammenwirkens mit zumindest einem Quersicherungselement eines mit dem Schneidenträgerelement 16a verbundenen weiteren Schneidenträgerelements (hier nicht näher dargestellt) der Schneidstrangsegmente 10a des Schneidstrangs 12a, eine Querbewegung des Schneidenträgerelements 16a entlang zumindest zweier entgegengesetzt ausgerichteten Richtungen in einem gekoppelten Zustand relativ zum weiteren Schneidenträgerelement zumindest weitestgehend zu verhindern. Hierbei ist der Quersicherungsbereich 78a als Rippe ausgebildet. Es ist jedoch auch denkbar, dass der Quersicherungsbereich 78a eine andere, einem Fachmann als sinnvoll erscheinende Ausgestaltung aufweist, wie beispielsweise eine Ausgestaltung als Nut usw. Der Quersicherungsbereich 78a ist auf einer dem einstückig mit dem Schneidenträgerelement 16a ausgebildeten Schneidelement 14a zugewandten Seite des Verbindungselements 18a angeordnet.

Ferner weist das Schneidenträgerelement 16a zwei Quersicherungselemente 24a, 80a auf, die dazu vorgesehen sind, in einem gekoppelten Zustand des Schneidenträgerelements 16a mit dem weiteren Schneidenträgerelement mit einem Quersicherungsbereich des weiteren Schneidenträgerelements zusammenzuwirken. Die Quersicherungselemente 24a, 80a sind jeweils in einem die Verbindungsausnehmung 38a begrenzenden Randbereich des Schneidenträgerelements 16a angeordnet. Hierbei sind die Quersicherungselemente 24a, 80a einstückig mit dem Schneidenträgerelement 16a ausgebildet. Die Quersicherungselemente 24a, 80a sind jeweils mittels eines Prägeverfahrens einstückig an das Schneidenträgerelement 16a angeformt. Somit erstrecken sich die Quersicherungselemente 24a, 80a, betrachtet entlang einer zumindest im Wesentlichen senkrecht zur Schneidebene des Schneidstrangs 12a verlaufenden Richtung, maximal bis zu den Außenflächen 46a des Schneidenträgerelements 16a.

Zudem sind die Quersicherungselemente 24a, 80a, betrachtet entlang einer zumindest im Wesentlichen senkrecht zur Schneidebene des Schneidstrangs 12a verlaufenden Richtung, an einander abgewandten Seiten des Schneidenträgerelements 16a angeordnet. Ferner sind die Quersicherungselemente 24a, 80a relativ zueinander versetzt an dem Schneidenträgerelement 16a angeordnet. Somit sind die Quersicherungselemente 24a, 80a, bezogen auf die Schneidebene des Schneidstrangs 12a, differierend von einer spiegelsymmetrischen Anordnung an dem Schneidenträgerelement 16a angeordnet. Hierbei sind die Quersicherungselemente 24a, 80a als partielle Fortsätze an einem Randbereich der Verbindungsausnehmung 38a ausgebildet. Es ist jedoch auch denkbar, dass die Quersicherungselemente 24a, 80a eine andere, einem Fachmann als sinnvoll erscheinende Ausgestaltung und/oder Anordnung aufweisen, wie beispielsweise eine Ausgestaltung als parallel verlaufende Stege, die eine nutförmige Ausnehmung im Randbereich der Verbindungsausnehmung 38a, betrachtet entlang einer zumindest im Wesentlichen senkrecht zur Schneidebene des Schneidstrangs 12a verlaufenden Richtung, begrenzen.

In den Figuren 6 bis 9 sind alternative Ausführungsbeispiele dargestellt. Im Wesentlichen gleichbleibende Bauteile, Merkmale und Funktionen sind grundsätzlich mit den gleichen Bezugszeichen beziffert. Die nachfolgende Beschreibung beschränkt sich im Wesentlichen auf die Unterschiede zu dem in den Figuren 2 bis 5 beschriebenen, ersten Ausführungsbeispiel, wobei bezüglich gleichbleibender Bauteile, Merkmale und Funktionen auf die Beschreibung des ersten Ausführungsbeispiels in den Figuren 2 bis 5 verwiesen werden kann.

Figur 5 zeigt ein alternativ zu dem in Figur 4 dargestellten Schneidstrangsegment 10a ausgebildetes Schneidstrangsegment 10a'. Das Schneidstrangsegment 10a' ist zumindest im Wesentlichen analog zu dem in Figur 4a dargestellten Schneidstrangsegment 10a ausgebildet. Im Unterschied zum Schneidstrangsegment 10a aus Figur 4 weist das Schneidstrangsegment 10a' aus Figur 5 ein partikelbestücktes Schneidelement 14a' auf. Hierbei weist das Schneidelement 14a' eine Beschichtung auf, in die Partikel eingebracht sind. Die Partikel sind hierbei als Diamantpartikel ausgebildet. Es ist jedoch auch denkbar, dass die Partikel eine andere, einem Fachmann als sinnvoll erscheinende Ausgestaltung aufweisen, wie beispielsweise eine Ausgestaltung als Hartmetallpartikel, als keramische Partikel usw.

Figur 6 zeigt ein weiteres, alternatives Schneidstrangsegment 10b eines Schneidstrangs 12b einer nicht erfindungsgemäßen Werkzeugmaschinentrennvorrichtung 26b. Das Schneidstrangsegment 10b umfasst zumindest ein Schneidenträgerelement 16b und zumindest ein Schneidelement 14b. Das Schneidenträgerelement 16b und das Schneidelement 14b sind einstückig ausgebildet. Das Schneidelement 14b weist hierbei eine zumindest Titancarbid aufweisende Schneidschicht 70b auf. Das Schneidenträgerelement 16b umfasst zur Bildung des Schneidstrangs 12b zumindest ein Verbindungselement 18b, das zumindest im Wesentlichen bündig mit zumindest einer Außenfläche 46b des Schneidenträgerelements 16b abschließt. Das Verbindungselement 18b ist bolzenförmig ausgebildet. Hierbei erstreckt sich das Verbidnungselement 18b entlang einer zumindest im Wesentlichen senkrecht zu einer Schneidebene des Schneidstrangs 12b verlaufenden Richtung. Ferner weist das Schneidenträgerelement 16b eine Verbindungsausnehmung 38b auf. Die Verbindungsausnehmung 38b ist dazu vorgesehen, zur Bildung des als Schneidkette ausgebildeten Schneidstrangs 12b mittels eines Zusammenwirkens mit einem Verbindungselement eines weiteren Schneidenträgerelements eines weiteren Schneidstrangsegments (hier nicht näher dargestellt) des Schneidstrangs 12b eine formschlüssige Verbindung zwischen dem Schneidenträgerelement 16b und dem weiteren Schneidenträgerelement zu realisieren, mittels derer das Schneidenträgerelement 16b und das weitere Schneidenträgerelement schwenkbar miteinander verbunden sind.

Des Weiteren weist das Schneidenträgerelement 16b zumindest ein Quersicherungselement 24b auf, das dazu vorgesehen ist, eine Querbewegung des Schneidenträgerelements 16b in einem gekoppelten Zustand relativ zum weiteren Schneidenträgerelement zumindest weitestgehend zu verhindern. Zudem weist das Schneidenträgerelement 16b einen Quersicherungsbereich 78b auf. Das Quersicherungselement 24b ist als Fortsatz ausgebildet. Hierbei ist das Quersicherungselement 24b in einem Kopplungsbereich 82b des Schneidenträgerelements 16b angeordnet. Somit begrenzt das Quersicherungselement 24b zusammen mit dem Kopplungsbereich 82b eine zumindest im Wesentlichen parallel zur Schneidebene des Schneidstrangs 12b verlaufende nutförmige Ausnehmung zu einer Aufnahme eines Quersicherungsbereichs (hier nicht näher dargestellt) des weiteren Schneidenträgerelements in einem gekoppelten Zustand. Im Kopplungsbereich 82b ist das Verbindungselement 18b angeordnet, das in eine Verbindungsausnehmung des weiteren Schneidenträgerelements zu einer Realisierung einer formschlüssigen Verbindung bei einer Montage des Schneidstrangs 12b eingeführt wird. Das Quersicherungselement 24b ist einstückig mit dem Schneidenträgerelement 16b ausgebildet. Hierbei ist das Quersicherungselement 24b mittels eines Prägeverfahrens einstückig an das Schneidenträgerelement 16b angeformt.

Der Quersicherungsbereich 78b ist, betrachtet entlang einer Schneidrichtung des Schneidstrangs 12b, an einer Seite des Schneidenträgerelements 16b angeordnet, die dem Kopplungsbereich 82b abgewandt ist. Hierbei ist der Quersicherungsbereich 78b als rippenförmiger Längsfortsatz ausgebildet. Es ist jedoch auch denkbar, dass der Quersicherungsbereich 78b eine andere, einem Fachmann als sinnvoll erscheinende Ausgestaltung aufweisen, wie beispielsweise eine Ausgestaltung als Nut usw. Das Quersicherungselement 24b überdeckt den Quersicherungsbereich des weiteren Schneidenträgerelements in einem gekoppelten Zustand um eine Querbewegung des Schneidenträgerelements 16b relativ zum weiteren Schneidenträgerelement entlang zumindest zweier entgegengesetzt ausgerichteten Richtungen zumindest weitestgehend zu vermeiden. Zudem umfasst das Schneidenträgerelement 16b zumindest ein Segmentführungselement 40b. Ferner weist das Schneidenträgerelemente 16b eine Druckkraftübertragungsfläche 72b auf.

Figur 7 zeigt ein erfindungsgemäßes alternativ zu dem in Figur 6 dargestellten Schneidstrangsegment 10b ausgebildetes Schneidstrangsegment 10b'. Das Schneidstrangsegment 10b' ist zumindest im Wesentlichen analog zu dem in Figur 6 dargestellten Schneidstrangsegment 10b ausgebildet. Im Unterschied zum Schneidstrangsegment 10b aus Figur 6 weist das Schneidstrangsegment 10b' aus Figur 7 ein partikelbestücktes Schneidelement 14b' auf. Hierbei weist das Schneidelement 14b' eine Beschichtung auf, in die Partikel eingebracht sind. Die Partikel sind hierbei als Diamantpartikel ausgebildet. Es ist jedoch auch denkbar, dass die Partikel eine andere, einem Fachmann als sinnvoll erscheinende Ausgestaltung aufweisen, wie beispielsweise eine Ausgestaltung als Hartmetallpartikel, als keramische Partikel usw.

Figur 8 zeigt ein weiteres, alternatives Schneidstrangsegment 10c eines Schneidstrangs 12c einer nicht erfindungsgemäßen Werkzeugmaschinentrennvorrichtung 26c. Das Schneidstrangsegment 10c umfasst zumindest ein Schneidenträgerelement 16c und zumindest ein Schneidelement 14c. Das Schneidenträgerelement 16c und das Schneidelement 14c sind einstückig ausgebildet. Das Schneidelement 14c weist hierbei eine zumindest Titancarbid aufweisende Schneidschicht 70c auf. Das Schneidenträgerelement 16c umfasst zur Bildung des Schneidstrangs 12c ein bolzenförmiges Verbindungselement 18c und eine Verbindungsausnehmungen 38c, in die ein bolzenförmiges Verbindungselement (hier nicht näher dargestellt) eines weiteren Schneidenträgerelements (hier nicht näher dargestellt) des Schneidstrangs 12c einbringbar ist. Zudem umfasst das Schneidenträgerelement 16c zumindest ein Segmentführungselement 40c. Ferner umfasst das Schneidenträgerelement 16c einen dreiecksförmigen Antriebsbereich 76c. Hierbei ist das Segmentführungselement 40c im Antriebsbereich 76c angeordnet. Ferner ist eine Antriebsfläche 74c des Schneidenträgerelements 16c im Antriebsbereich 76c angeordnet.

Figur 9 zeigt ein erfindungsgemäßes alternativ zu dem in Figur 8 dargestellten Schneidstrangsegment 10c ausgebildetes Schneidstrangsegment 10c'. Das Schneidstrangsegment 10c' ist zumindest im Wesentlichen analog zu dem in Figur 8 dargestellten Schneidstrangsegment 10c ausgebildet. Im Unterschied zum Schneidstrangsegment 10c aus Figur 8 weist das Schneidstrangsegment 10c' aus Figur 9 ein partikelbestücktes Schneidelement 14c' auf. Hierbei weist das Schneidelement 14c' eine Beschichtung auf, in die Partikel eingebracht sind. Die Partikel sind hierbei als Diamantpartikel ausgebildet. Es ist jedoch auch denkbar, dass die Partikel eine andere, einem Fachmann als sinnvoll erscheinende Ausgestaltung aufweisen, wie beispielsweise eine Ausgestaltung als Hartmetallpartikel, als keramische Partikel usw.

## Patentansprüche

1. Verfahren zur Herstellung von zumindest einem Schneidstrangsegment (10) eines Schneidstrangs (12), das zumindest ein Schneidelement (14) und zumindest ein Schneidenträgerelement (16), welches zumindest ein Verbindungselement (18) aufweist, umfasst, wobei das Schneidstrangsegment (10) in einem ersten Schritt aus einem Bandmaterial (20) gestanzt wird, wobei in einem weiteren Schritt das Schneidstrangsegment (10) einer Veredelungsvorrichtung (22) zugeführt wird, wobei in einem weiteren Schritt in der Veredelungsvorrichtung (22) zumindest in einem Teilbereich des Schneidstrangsegments (10) eine Beschichtung auf das Schneidstrangsegment (10) aufgebracht wird, **dadurch gekennzeichnet, dass** in einem weiteren Schritt in der Veredelungsvorrichtung (22) eine Bestückung des mit Beschichtung versehenen Teilbereichs des Schneidstrangsegments (10) mit Partikeln erfolgt, wobei das Schneidstrangsegment (10) zumindest in einem Bereich des Schneidelements (14) des Schneidstrangsegments (10) partikelbestückt wird, wobei in einem weiteren Schritt zumindest an das Schneidenträgerelement (16) ein Quersicherungselement (24) angeprägt wird.

2. Verfahren nach Anspruch 1, **dadurch gekennzeichnet, dass** als Bandmaterial (20) Bimetall verwendet wird.

3. Verfahren zumindest nach Anspruch 1, **dadurch gekennzeichnet, dass** als Bandmaterial (20) ein Hartmetall verwendet wird.

4. Verfahren nach einem der vorhergehenden Ansprüche, **dadurch gekennzeichnet, dass** in einem weiteren Schritt das Schneidstrangsegment (10) zumindest in einem Teilbereich des Schneidelements (14) einem Prägevorgang unterzogen wird.

5. Verfahren nach einem der Ansprüche 1 bis 4, **dadurch gekennzeichnet, dass** die Beschichtung aus einem Lot gebildet wird.

6. Verfahren nach einem der Ansprüche 1 bis 4, **dadurch gekennzeichnet, dass** der Teilbereich des Schneidstrangsegments (10) von dem Schneidelement (14) des Schneidstrangsegments (10) gebildet wird.

7. Werkzeugmaschinentrennvorrichtung mit zumindest einer Führungseinheit (28a) und mit zumindest einem Schneidstrang (12a; 12b; 12c), **dadurch gekennzeichnet, dass** der Schneidstrang wenigstens ein mittels eines Verfahrens nach einem der Ansprüche 1 bis 4 hergestelltes Schneidstrangsegment (10a; 10b; 10c) aufweist.

8. Werkzeugmaschinentrennvorrichtung nach Anspruch 7, **gekennzeichnet durch** zumindest ein Drehmomentübertragungselement (30a), das zumindest teilweise in der Führungseinheit (28a) gelagert ist.

9. Werkzeugmaschinentrennvorrichtung zumindest nach Anspruch 8, **dadurch gekennzeichnet, dass** das Schneidelement (14a'; 14b'; 14c') mit Diamanten und/oder mit einem keramischen Werkstoff partikelbestückt ausgebildet ist.

10. Tragbare Werkzeugmaschine mit zumindest einer Kopplungsvorrichtung (34a), die formschlüssig und/oder kraftschlüssig mit einer Werkzeugmaschinentrennvorrichtung nach einem der Ansprüche 7 bis 9 gekoppelt ist.

## Claims

1. Method for producing at least one cutting strand segment (10) of a cutting strand (12) which comprises at least one cutting element (14) and at least one cutter carrier element (16) that has at least one connecting element (18), wherein, in a first step, the cutting strand segment (10) is punched out of a band material (20), wherein in a further step, the cutting strand segment (10) is fed to a finishing device (22), wherein in a further step, in the finishing device (22) a coating is applied to the cutting strand segment (10) at least in a subregion of the cutting strand segment (10) **characterized in that**, in a further step, in the finishing device (22), that subregion of the cutting strand segment (10) that is provided with a coating is furnished with particles, wherein the cutting strand segment (10) is furnished with particles at least in a region of the cutting element (14) of the cutting strand segment (10), wherein in a further step, a transverse securing element (24) is embossed at least onto the cutter carrier element (16).

2. Method according to Claim 1, **characterized in that** bimetal is used as the band material (20).

3. Method at least according to Claim 1, **characterized in that** a hard metal is used as the band material (20).

4. Method according to one of the preceding claims, **characterized in that**, in a further step, the cutting strand segment (10) is subjected to an embossing operation at least in a subregion of the cutting element (14) .

5. Method according to one of Claims 1 to 4, **characterized in that** the coating is formed of a solder.

6. Method according to one of Claims 1 to 4, **characterized in that** the subregion of the cutting strand segment (10) is formed by the cutting element (14) of the cutting strand segment (10).

7. Power-tool parting device having at least one guide unit (28a) and having at least one cutting strand (12a; 12b; 12c), **characterized in that** the cutting strand has at least one cutting strand segment (10a; 10b; 10c) produced by means of a method according to one of Claims 1 to 4.

8. Power-tool parting device according to Claim 7, **characterized by** at least one torque transmission element (30a) which is mounted at least partially in the guide unit (28a).

9. Power-tool parting device at least according to Claim 8, **characterized in that** the cutting element (14a'; 14b'; 14c') is formed in a manner furnished with particles of diamonds and/or of a ceramic material.

10. Portable power tool having at least one coupling device (34a) which is coupled in a form-fitting and/or force-fitting manner to a power-tool parting device according to one of Claims 7 to 9

## Revendications

1. Procédé de fabrication d'au moins un segment de chaîne de coupe (10) d'une chaîne de coupe (12) qui présente au moins un élément de coupe (14) et au moins un élément de support d'arête de coupe (16) qui présente au moins un élément de liaison (18), le segment de chaîne de coupe (10), dans une première étape, étant estampé dans un matériau en bande (20), dans une étape supplémentaire, le segment de chaîne de coupe (10) étant acheminé à un dispositif d'amélioration (22), dans une étape supplémentaire dans le dispositif d'amélioration (22), un revêtement étant appliqué sur le segment de chaîne de coupe (10) au moins dans une région partielle du segment de chaîne de coupe (10), **caractérisé en ce que** dans une étape supplémentaire dans le dispositif d'amélioration (22), la région partielle du segment de chaîne de coupe (10) pourvue du revêtement est garnie de particules, le segment de chaîne de coupe (10), au moins dans une région de l'élément de coupe (14) du segment de chaîne de coupe (10), étant garni de particules, dans une étape supplémentaire, au moins au niveau de l'élément de support de tranchant (16), un élément de fixation transversale (24) étant appliqué par gaufrage.

2. Procédé selon la revendication 1, **caractérisé en ce que** l'on utilise un bilame en tant que matériau de bande (20).

3. Procédé selon au moins la revendication 1, **caractérisé en ce que** l'on utilise un métal dur en tant que matériau de bande (20).

4. Procédé selon l'une quelconque des revendications précédentes, **caractérisé en ce que** dans une étape supplémentaire, le segment de chaîne de coupe (10) est soumis au moins dans une région partielle de l'élément de coupe (14) à une opération de gaufrage.

5. Procédé selon l'une quelconque des revendications 1 à 4, **caractérisé en ce que** le revêtement est formé d'une brasure.

6. Procédé selon l'une quelconque des revendications 1 à 4, **caractérisé en ce que** la région partielle du segment de chaîne de coupe (10) est formée par l'élément de coupe (14) du segment de chaîne de coupe (10).

7. Dispositif de coupe de machine-outil comprenant au moins une unité de guidage (28a) et au moins une chaîne de coupe (12a ; 12b ; 12c), **caractérisé en ce que** la chaîne de coupe présente au moins un segment de chaîne de coupe (10a ; 10b ; 10c) fabriqué au moyen d'un procédé selon l'une quelconque des revendications 1 à 4.

8. Dispositif de coupe de machine-outil selon la revendication 7, **caractérisé par** au moins un élément de transfert de couple (30a) qui est supporté au moins en partie dans l'unité de guidage (28a).

9. Dispositif de coupe de machine-outil selon au moins la revendication 8, **caractérisé en ce que** l'élément de coupe (14a' ; 14b' ; 14c') est réalisé sous forme garnie de particules avec du diamant et/ou avec un matériau céramique.

10. Machine-outil portative comprenant au moins un dispositif d'accouplement (34a) qui est accouplé par engagement par correspondance de formes et/ou par force avec un dispositif de coupe de machine-outil selon l'une quelconque des revendications 7 à 9.
